# EUROPÄISCHE PATENTSCHRIFT

(11) **EP 3 552 345 B1**
(45) Veröffentlichungstag und Bekanntmachung des Hinweises auf die Patenterteilung: **20.07.2022**
(21) Anmeldenummer: 17811277.7
(22) Anmeldetag: 05.12.2017
(51) Int. Cl.: H04L 9/32

(54) **MASTERBLOCKCHAIN**
MASTER BLOCKCHAIN
CHAÎNE DE BLOCS MAÎTRESSE

(30) Priorität: 08.12.2016 DE 102016224537
(43) Veröffentlichungstag der Anmeldung: 16.10.2019
(73) Patentinhaber: Bundesdruckerei GmbH, 10969 Berlin (DE)
(72) Erfinder: KOMAROV, Ilya, 13507 Berlin (DE); PAESCHKE, Manfred, 16348 Wandlitz (DE); DRESSEL, Olaf, 14641 Wustermark (DE)
(74) Vertreter: Richardt Patentanwälte PartG mbB
(86) Internationale Anmeldenummer: PCT/EP2017/081464
(87) Internationale Veröffentlichungsnummer: WO 2018/104276

(56) Entgegenhaltungen:
- AU-A4- 2016 101 976
- Juan Graray: "The Bitcoin Backbone Protocol: Analysis and Applications", Advances in Cryptology - EUROCRYPT 2015, 26. April 2015 (2015-04-26), XP055440318, Berlin, Heidelberg ISBN: 978-3-662-46803-6 Gefunden im Internet: URL:https://rd.springer.com/content/pdf/10 .1007/978-3-662-46803-6_10.pdf [gefunden am 2018-01-12]
- MATTHEW ENGLISH S ET AL: "Disintermediation of Inter-Blockchain Transactions", ARXIV.ORG, CORNELL UNIVERSITY LIBRARY, 201 OLIN LIBRARY CORNELL UNIVERSITY ITHACA, NY 14853, 8. September 2016 (2016-09-08), XP080725382,
- Stefan Thomas ET AL: "A Protocol for Interledger Payments", , 9. Februar 2016 (2016-02-09), XP055393555, Gefunden im Internet: URL:https://interledger.org/interledger.pd f [gefunden am 2017-07-25]
- AMIR Y ET AL: "Steward: Scaling Byzantine Fault-Tolerant Replication to Wide Area Networks", IEEE TRANSACTIONS ON DEPENDABLE AND SECURE COMPUTING, IEEE SERVICE CENTER, NEW YORK, NY, US, Bd. 7, Nr. 1, 26. August 2008 (2008-08-26) , Seiten 80-93, XP011332184, ISSN: 1545-5971, DOI: 10.1109/TDSC.2008.53

## Beschreibung

Die Erfindung betrifft ein Verfahren zum manipulationssicheren Speichern von Daten in einer Blockchain unter Verwendung eines Netzwerksystems sowie das Netzwerksystem zum Ausführen des Verfahrens.

Aus dem Stand der Technik ist die Speicherung von Daten in Blockchains, d. h. Blockketten, bekannt. Beispielsweise werden Blockchains verwendet, um Transaktionen von Kryptowährungen, wie beispielsweise dem Bitcoin-Zahlungssystem, zu protokollieren. Eine Blockchain stellt eine erweiterbare Liste von Datensätzen bereit, welche in einzelnen Blöcken angeordnet sind. Die Integrität der einzelnen Blöcke wird durch eine Verkettung unter Verwendung kryptografischer Prüfsummen der einzelnen Blöcke gesichert. Dadurch, dass jeder Block eine kryptografische Prüfsumme des vorausgehenden Blocks inklusive der in dem vorausgehenden Block gespeicherten kryptografischen Prüfsumme umfasst, ergibt sich eine Verkettung der Blöcke, bei welcher jeder Block eine Prüfsumme umfasst, welche auf den Inhalten aller vorausgehenden Blöcke beruht. Somit ist es schwer, eine solche Blockchain nachträglich zu manipulieren, da hierzu nicht nur ein einzelner Block manipuliert werden müsste, sondern alle nachfolgenden Blöcke, da die Prüfsumme jedes nachfolgenden Blocks auch den zu manipulierenden Block umfasst.

Die Blockchain beruht auf einem Konsens des zugrundeliegenden Netzwerks, d. h. eine Einigung der Knoten des Netzwerks, über die Gültigkeit der in der Blockchain protokollierten Daten, wie z. B. Ereignissen.

Schafft es ein Angreifer, eine ausreichende Zahl der zu Konsensbildung beitragenden Knoten des zugrundeliegenden Netzwerks unter seinen Einfluss zu bringen, wird er dadurch in die Lage versetzt, die Konsensbildung und damit zukünftige Erweiterungen der Blockchain zu manipulieren. Ein solcher Angriff wird auch als "51 %-attack" bzw. "Hash Power Attack" bezeichnet.

"The Bitcoin Backbone Protocol: Analysis and Applications" von Juan Graray et al., Advances in Cryptology - EUROCRYPT 2015, 26. April 2015, beschreibt das Bitcoin-Protokoll und dessen grundlegenden Funktionen, welche als Bitcoin-Backbone bezeichnet werden.

"Disintermediation of Inter-Blockchain Transactions" von Matthew English et al., arxiv.org, 8. September 2016, beschreibt Transaktionen zwischen Blockchains, welche verschiedene Versionen von elektronischem Peer-to-Peer-Geld darstellen, wobei dieselben grundlegenden Prinzipien von Bitcoin verwendet werden.

"A Protocol for Interledger Payments" von Stefan Thomas et al., https://interledger.org/interledger.pdf, 9. Februar 2016, beschreibt ein Protokoll für Zahlungen zwischen Zahlungssystemen. Es ermöglicht sichere Übertragungen zwischen Ledgern und ermöglicht jedem, der über Konten in zwei Ledgern verfügt, eine Verbindung zwischen diesen herzustellen. Verbindungen können zusammengestellt werden, um Zahlungen zwischen beliebigen Ledgern zu ermöglichen, wodurch ein globales Liquiditätsdiagramm oder ein Interledger erstellt wird.

AU 2016 101 976 A4 beschreibt ein Ledger mit mehreren verteilten Replikaten. Jedes Replikat implementiert hoch verfügbare Transaktionen mit skalierten Datenoperationen. Das Ledger implementiert einen vollständig asynchronen byzantinischen Konsensus-Algorithmus ohne Führer. Mehrere solcher Ledger sind in einer Föderation mit offener Mitgliedschaft und ohne zentrale Verwaltung integriert.

Der Erfindung liegt demgegenüber die Aufgabe zugrunde, ein sicheres Verfahren zum Speichern von Daten in einer Blockchain zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen betreffen ein Verfahren zum manipulationssicheren Speichern von Daten in einer ersten Blockchain einer Mehrzahl von Blockchains unter Verwendung eines Netzwerksystems. Das Netzwerksystem umfasst eine Mehrzahl von untergeordneten Teilnetzwerken, wobei jedem untergeordneten Teilnetzwerk eine der Blockchains der Mehrzahl von Blockchains zugeordnet ist und wobei jedes untergeordnete Teilnetzwerk eine Mehrzahl von Datenverarbeitungseinheiten umfasst. Die Datenverarbeitungseinheiten bilden Knoten des entsprechenden untergeordneten Teilnetzwerks.

Das Netzwerksystem umfasst ferner ein übergeordnetes Teilnetzwerk, wobei dem übergeordneten Teilnetzwerk eine übergeordnete Masterblockchain zugeordnet ist und wobei das übergeordnete Teilnetzwerk zumindest einen ausgewählten Knoten aus jedem untergeordneten Teilnetzwerk der Mehrzahl von untergeordneten Teilnetzwerken umfasst.

Das Verfahren umfasst:
- Erstellen eines ersten zusätzlichen Blocks für die erste Blockchain, welcher als Eintrag die zu speichernden Daten umfasst, durch einen ersten Knoten eines ersten untergeordneten Teilnetzwerks, das der ersten Blockchain zugeordnet ist,
- Ausführen einer ersten Gültigkeitsprüfung des ersten zusätzlichen Blocks durch das erste untergeordnete Teilnetzwerk,
- auf ein positives Ergebnis der ersten Gültigkeitsprüfung hin, Weiterleiten des ersten zusätzlichen Blocks an das übergeordnete Teilnetzwerk durch den zumindest einen ausgewählten Knoten des ersten untergeordneten Teilnetzwerks, welchen das übergeordnete Teilnetzwerk umfasst,
- Ausführen einer zweiten Gültigkeitsprüfung des ersten zusätzlichen Blocks durch das übergeordnete Teilnetzwerk,
- auf ein positives Ergebnis der zweiten Gültigkeitsprüfung hin, Hinzufügen des ersten zusätzlichen Blocks zu der Masterblockchain,
- Freigabe durch das übergeordnete Teilnetzwerk für ein Hinzufügen des ersten zusätzlichen Blocks zu der ersten Blockchain,
- auf die Freigabe hin, Hinzufügen des ersten zusätzlichen Blocks zu der ersten Blockchain.

Unter einer "Blockchain" wird eine geordnete Datenstruktur verstanden, welche eine Mehrzahl von miteinander verketteten Datenblöcken umfasst. Beispielsweise wird jeder Block der Blockchain durch einen Hash-Wert identifiziert und referenziert einen Vorgängerblock in der Blockchain. Für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchains wurde im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Die Blockchain besteht aus einer Reihe von Datenblöcken, in denen jeweils ein oder mehrere Einträge bzw. Transaktionen zusammengefasst und mit einer Prüfsumme in Form eines Hashwerts versehen sind. Neue Blöcke der Blockchain werden in einem üblicher Weise rechenintensiven Prozess erzeugt, der auch als sogenanntes Mining bezeichnet wird. Diese neu erzeugten Blöcke werden anschließend der Blockchain hinzugefügt und über ein Netzwerk an alle Teilnehmer, bzw. Knoten des Netzwerks, verbreitet.

Ausführungsformen können den Vorteil haben, dass die Blockchain durch die Speicherung kryptografischer Prüfsumme, d.h. Haschwerten, des vorangehenden Blocks im jeweils nachfolgenden Block ein hohes Maß an Sicherheit gegenüber nachträglichen Manipulationen bietet. Bei einer Blockchain werden die Einträge bzw. Transaktionen eines Blocks beispielsweise durch einen Merkle-Baum paarweise miteinander gehasht und nur der letzte auf diese Weise erhaltene Hashwert des Blocks, der sogenannte Root-Hashwert bzw. Wurzelhashwert, als Prüfsumme beispielsweise in einem Header des Blocks vermerkt. Das Verketten der Blöcke kann dann unter Verwendung dieser Root-Hashwerte. Jeder Block der Blockchain enthält in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner von diesen umfasst und über den Root-Hashwert gesicherten Transaktionen praktisch ausgeschlossen ist, da hierfür die Hashwerte aller nachfolgenden Blöcke in kurzer Zeit ebenfalls neu berechnet werden müssten.

Zudem kann durch eine Anpassung der notwendigen Rechenintensität für die Erstellung jeweils neuer Blöcke die Sicherheit zusätzlich erhöht werden. Die für die Erstellung neuer Blöcke notwenige Rechenintensität lässt sich über Anforderungen an den Hashwert des zu erstellenden neuen Blocks steuern. Der resultierende Hash-Wert ist nicht vorhersagbar, vielmehr handelt es sich um eine zufallsverteilte Zahl. Es lässt sich aber berechnen, wieviel Zeit in Abhängigkeit von der aufgewendeten Rechenleistung im statistischen Mittel zum Auffinden eines gültigen neuen Blocks notwendig ist. Der Hashwert eines Blocks lässt sich beispielsweise durch Hinzufügen und Variieren eines Nounce variieren. Aufgrund der Kettenstruktur können Daten, die einmal in einer Blockchain gespeichert sind, nicht mehr geändert oder entfernt werden, ohne große Teile der Blockchain zu ersetzen. Eine solche Ersetzung scheidet jedoch als Folge einer ausreichend rechenintensiven Generierung neuer Blöcke aus. Bekannte Ausführungsformen einer Blockchain, wie etwa im Fall der Kryptowährung Bitcoin, basieren auf einer Anonymität der an den Transaktionen beteiligten Partner. Demgegenüber kann durch oben beschriebene Signatur der in die Transaktionen eingetragenen Hashwerte, deren Authentizität belegt und ihr Ursprung nachgewiesen werden. Hierdurch kann die Fälschungssicherheit verbessert werden.

Eine Anforderung an einen gültigen Block kann beispielsweise darin bestehen, dass der Hashwert des Headers des Blocks kleiner gleich einem Grenzwert ist. Die Hashwertberechnung kann beispielsweise mit dem Secure Hash Algorithm (SHA) SHA 256 erfolgen. Der resultierende Hash-Wert ist in diesem Fall eine Zufallszahl zwischen 0 und 2²⁵⁶-1. Die Wahrscheinlichkeit, dass beim Anwenden des Hashalgorithmus einen bestimmten Hash herauskommt, ist somit (maximaler Hash-Wert+1)⁻¹, im Falle des SHA 256-Algorithums also 2⁻²⁵⁶. Die Wahrscheinlichkeit, dass der resultierende Hash-Wert kleiner gleich einem Grenzwert bzw. Zielwert (engl. "target") ist, beträgt daher (target)/(max. Hash-Wert). Für einen beispielhaften maximalen Grenzwert von (2¹⁶-1)·2²⁰⁸ beträgt die Wahrscheinlichkeit [(2¹⁶-1)·2²⁰⁸]/ 2²⁵⁶ ≈ 2⁻³². Die Schwierigkeit S eine Hash-Wert zu erhalten, welcher kleiner gleich einem gewählten Grenzwert bzw. target ist, kann in Abhängigkeit eines maximalen Grenzwerts bzw. max. target wie folgt angegeben werden: S = (max. target)/target. Mithin ist die Wahrscheinlichkeit einen Hash-Wert zu erhalten, welcher kleiner gleich dem gewählten Grenzwert ist, für das zuvor gegebene Beispiel: 2⁻³²/S. Als Beispiel sei ein Computersystem mit einer bestimmten Hashrate betrachtet, welches im Durchschnitt alle x·Sek. einen Hash-Wert findet, welcher kleiner gleich dem gewählten Grenzwert ist. Soll das Computersystem anstelle aller x·Sek. im Durchschnitt alle y·Sek. einen Treffer erzielen, so kann die Schwierigkeit entsprechend angepasst werden: S_{y}=(x/y)·S. Entsprechende Anpassungen der Schwierigkeit können auch dazu verwendet werden die Trefferrate bei Veränderungen des Computersystems, z.B. Veränderungen der Rechenleistung durch Erhöhen oder Verringern der Anzahl an Blockchain-Servern, konstant zu halten. Wird die Schwierigkeit so angepasst, dass alle y·Sek. ein Treffer erzielt wird, kann die Hashrate R des Computersystems wie folgt parametrisiert werden: R = (2³²·S)/(y·Sek.).

Werden gültige Blöcke durch ein rechenintensive Verfahren, wie das zuvor Beschriebene erzeugt, so vertrauen die Teilnehmer des Blockchain-Netzwerks der längsten gültigen Blockchain, da hinter dieser die meiste Rechenleistung steht und somit angenommen werden kann, dass diese von der Mehrheit der Teilnehmer als gültig anerkannt wird. Kommt es beispielsweise dazu, dass ein Fork, d.h. eine Verzweigung, in der Blockchain entsteht, setzt sich irgendwann der Fork mit der größeren Kettenlänge durch, da anzunehmen ist, dass hinter diesem die Mehrheit der Teilnehmer steht.

Eine Blockchain kann beispielsweise auch in Form einer privaten Blockchain implementiert werden, wobei nur eine ausgewählte Gruppe von Teilnehmern eine Berechtigung zum Hinzufügen gültiger Blöcke besitzt. Eine entsprechende Berechtigung kann beispielsweise mittels einer Signatur unter Verwendung eines privaten kryptographischen Schlüssels nachgewiesen werden. Der private kryptographische Schlüssel kann zu einem asymmetrischen Schlüsselpaar gehören, zu welchem auch ein öffentlicher kryptographischer Schlüssel gehört, mit dem die Signatur geprüft werden kann. Dem asymmetrischen Schlüsselpaar kann zudem beispielsweise ein Zertifikat zugeordnet sein, welches die Berechtigung zum Erzeugen eines gültigen Blocks der Blockchain belegt. Dieses Zertifikat kann ferner einer PKI zugeordnet sein, welche die Authentizität des Zertifikats belegt. Nach einer weiteren Ausführungsform kann beispielsweise für jeden Teilnehmer aus der ausgewählte Gruppe ein öffentlicher Schlüssel in der Blockchain hinterlegt sein, beispielsweise in einem Genesisblock. Anhand dieser öffentlichen Schlüssel kann geprüft werden, ob Signaturen von Blöcken und damit die entsprechenden Blöcke selbst gültig sind.

Ein Konsens kann auch auf andere Weise in einer Blockchain implementiert werden. So kann etwa ein Konsens erreicht werden, indem über eine Aufnahme vorgeschlagener Einträge in die Blockchain abgestimmt wird. Beispielsweise führt jeder Teilnehmer eine eindeutige Liste anderer Teilnehmer, welchen er als Gruppe vertraut. Jeder Teilnehmer kann neue Einträge vorschlagen, die in einen neuen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmer seiner Liste stammen. Mit anderen Worten werden für die Entscheidung, ob ein Vorschlag für einen neuen Eintrag als gültig anerkannt wird, d.h. ob bezüglich der Gültigkeit dieses Eintrages ein Konsens zwischen den Teilnehmern besteht, nur die Stimmen derjenigen Teilnehmer berücksichtig, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%. Alle vorgeschlagenen Einträge, die dieses Kriterium erfüllen werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc., 2014, https://ripple.com/files/ripple_consensus_whitepaper.pdf).

Unter einem untergeordneten Teilnetzwerk wird hier eine Gruppe von Knoten des Netzwerksystems verstanden, welche kommunikativ miteinander verbunden sind und ein eigenständiges Netzwerk bilden. Dabei sind ausgewählte Knoten des untergeordneten Teilnetzwerks nach Ausführungsformen höchstens einem übergeordneten Teilnetzwerk zugeordnet. Das untergeordnete Teilnetzwerk umfasst ferner Knoten, welche allein dem untergeordneten Teilnetzwerk und keinem weiteren übergeordneten Teilnetzwerk zugeordnet sind.

Unter einem übergeordneten Teilnetzwerk wird hier eine Gruppe von Knoten des Netzwerksystems verstanden, welche kommunikativ miteinander verbunden sind und ein Teilnetzwerk bilden, wobei alle von dem übergeordneten Teilnetzwerk umfassten Knoten zugleich einem untergeordneten Teilnetzwerk zugeordnet sind.

Das Netzwerksystem bzw. die einzelnen untergeordneten und übergeordneten Teilnetzwerke können dabei beliebige Topologien aufweisen. Beispielsweise können sie als Kettennetzwerk, Stern- oder Knotennetzwerk oder All-Channel-Netzwerk konfiguriert sein.

Unter einer Masterblockchain wird hier eine Blockchain verstanden, welche alle Blöcke von ein oder mehreren anderen Blockchains, zumindest in Form eines Hashwerts, umfasst. Nach Ausführungsformen ist eine Eintragung eines zusätzlichen Blocks, einer der Blockchains hinzugefügt werden soll, in die Masterblockchain Voraussetzung dafür, dass der zusätzliche Block tatsächlich zu der untergeordneten Blockchain hinzugefügt wird. Mithin fungiert eine Masterblockchain als Kontrollinstanz für die Eintragung neuer Blöcke in untergeordnete Blockchains. Zugleich stellt eine Masterblockchain ein Referenzregister bereit, anhand dessen überprüft werden kann, ob die Blöcke der untergeordneten Blockchains die für ein Hinzufügen notwendigen Voraussetzungen erfüllt haben. Ferner können durch einen Abgleich zwischen der Masterblockchain in den untergeordneten Blockchains Manipulationen erkannt werden.

Für ein System, welches eine Mehrzahl von untergeordneten Netzwerken mit jeweils einer zugehörigen (untergeordneten) Blockchain umfasst, wird eine übergeordnete Blockchain, eine sog. Masterblockchain, vorgesehen. Dieser Masterblockchain liegt ein übergeordnetes Netzwerk zugrunde, welches ausgewählte Knoten aus jedem der untergeordneten Netzwerk umfasst. Soll in eine der untergeordneten Blockchains ein neuer Block eingetragen werden, wird dieser zunächst innerhalb des untergeordneten Netzwerks geprüft. Erzielt das untergeordnete Netzwerk einen Konsens darüber, dass der neue Block gültig ist, wird dieser Block von einem der ausgewählten Knoten, welcher sowohl dem untergeordneten als auch dem übergeordneten System zugeordnet ist, an das übergeordnete Netzwerk weitergeleitet. Erzielt das übergeordnete Netzwerk ebenfalls einen Konsens darüber, dass der neue Block gültig ist, wird der neue Block in die Masterblockchain eingetragen. Zudem wird der Block zur Eintragung in die untergeordnete Blockchain durch den ausgewählten Knoten des intergeordneten Systems freigegeben. Liegt die Freigabe durch den ausgewählten Knoten vor, erfolgt ebenfalls eine Eintragung in die untergeordnete Blockchain.

Ausführungsformen können den Vorteil haben, dass das übergeordnete Teilnetzwerk die untergeordneten Teilnetzwerke kontrolliert und die Eintragung von möglicherweise manipulierten Blöcken die Blockchains der untergeordneten Teilnetzwerke blockieren kann. Selbst wenn es einem Angreifer gelingen sollte, ein untergeordnetes Teilnetzwerk zu übernehmen, so erlangt er dadurch noch keine Kontrolle über das übergeordnete Teilnetzwerk. Insbesondere erlangt er keine Kontrolle über die Masterblockchain. Mithin kann durch Ausführungsformen die Sicherheit der untergeordneten Teilnetzwerke und deren Blockchains erhöht werden. Ferner können es Ausführungsformen erlauben, dass in das verteilte Netzwerk Strukturen implementiert werden, in denen Knoten von untergeordneten Teilnetzwerken nur Kenntnisse, Daten und Ereignisse besitzen, welche ihrem eigenen Teilnetzwerk zugeordnet sind, jedoch keinerlei Kenntnisse über Daten und Ereignisse anderer Teilnetzwerke. Hierdurch kann die Sicherheit des Netzwerkssystems weiter erhöht werden. Insbesondere ist es möglich, die Kenntnis sicherheitsrelevanter Daten auf eine kleine Gruppe von Netzwerkknoten zu beschränken und dadurch die Gefahr einer beabsichtigten und/oder unbeabsichtigten Weitergabe von sicherheitsrelevanten Daten an Dritte zu minimieren. Nach Ausführungsformen sind die ausgewählten Knoten der untergeordneten Teilnetzwerke, welche das übergeordnete Teilnetzwerk umfasst, kryptographisch geschützt.

Ausführungsformen können den Vorteil haben, dass die Sicherheit der ausgewählten Knoten der untergeordneten Teilnetzwerke erhöht wird. Die ausgewählten Knoten der untergeordneten Teilnetzwerke dienen als Kontrollinstanzen, welche für die Freigabe des Hinzufügens zusätzlicher Blöcke zu dem entsprechenden untergeordneten Teilnetzwerk verantwortlich sind. Dabei vermitteln die ausgewählten Knoten zwischen dem untergeordneten Teilnetzwerk und dem übergeordneten Teilnetzwerk, insbesondere setzen sie das Ergebnis der zweiten Gültigkeitsprüfung um: Im Falle einer erfolgreichen zweiten Gültigkeitsprüfung und einer damit verbundenen Eintragung des zusätzlichen Blocks in die Masterblockchain erteilen die ausgewählten Knoten die Freigabe zum Hinzufügen des entsprechenden zusätzlichen Blocks zur ersten Blockchain. Im Fall eines negativen Ergebnisses der zweiten Gültigkeitsprüfung blockieren die ausgewählten Knoten ein Hinzufügen des zusätzlichen Blocks zur ersten Blockchain unabhängig vom Ergebnis der ersten Gültigkeitsprüfung innerhalb des untergeordneten Teilnetzwerks.

Nach Ausführungsformen umfassen die ausgewählten Knoten der untergeordneten Teilnetzwerke, welche das übergeordnete Teilnetzwerk umfasst, jeweils ein Sicherheitsmodul. Ausführungsformen können den Vorteil haben, dass durch ein Sicherheitsmodul eine kryptografische Sicherung der ausgewählten Knoten in effektiver und effizienter Form implementiert werden kann.

Nach Ausführungsformen umfasst das übergeordnete Teilnetzwerk zumindest zwei ausgewählte Knoten aus jedem untergeordneten Teilnetzwerk der Mehrzahl von untergeordneten Teilnetzwerken. Ausführungsformen können den Vorteil haben, dass für das Hinzufügen des zusätzlichen Blocks zu der ersten Blockchain eine Freigabe von mehr als einem ausgewählten Knoten notwendig ist. Selbst wenn es einem Angreifer gelingen sollte, einen der ausgewählten Knoten zu übernehmen, so kann eine Eintragung eines ungültigen zusätzlichen Blocks nach wie vor durch den weiteren ausgewählten Knoten blockiert werden.

Nach Ausführungsformen erfolgt die Freigabe durch die ausgewählten Knoten des ersten untergeordneten Teilnetzwerks, welchen das übergeordnete Teilnetzwerk umfasst. Ausführungsformen können den Vorteil haben, dass die ausgewählten Knoten des untergeordneten Teilnetzwerks die Freigabe des zusätzlichen Blocks in effizienter und effektiver Weise kontrollieren können.

Nach Ausführungsformen umfasst die Freigabe zumindest eine Signatur des ersten zusätzlichen Blocks durch die ausgewählten Knoten des ersten untergeordneten Teilnetzwerks. Ausführungsformen können den Vorteil haben, dass durch die Signaturen der ausgewählten Knoten die Freigabe für das Hinzufügen des ersten zusätzlichen Blocks in kryptografisch sicherer und nachprüfbarer Form belegt werden kann.

Nach Ausführungsformen setzt das positive Ergebnis der ersten Gültigkeitsprüfung einen Konsens zwischen Knoten des ersten untergeordneten Teilnetzwerks voraus, welche für das Hinzufügen zusätzlicher Blöcke zu der ersten Blockchain stimmberechtigt sind.

Ausführungsformen können den Vorteil haben, dass sie einen effizienten Prüfmechanismus für die Prüfung der Ungültigkeit eines zusätzlichen Blocks für die erste Blockchain bereitstellen. Ein solcher Konsens kann insbesondere dann von Vorteil sein, wenn das Hinzufügen des zusätzlichen Blocks nicht nur einen einzelnen Knoten des untergeordneten Teilnetzwerks, sondern vielmehr eine Mehrzahl und/oder alle Knoten des untergeordneten Teilnetzwerks betrifft. Beispielsweise kann durch den Block eine Umstellung von einer von dem untergeordneten Teilnetzwerk verwendeten Softwareversion zu einer anderen Softwareversion oder einem neuen Prozessschritt initialisiert werden.

Ferner kann die Notwendigkeit eines Konsenses zwischen einer Mehrzahl von Knoten des ersten untergeordneten Teilnetzwerks vorteilhaft sein, da ein Angreifer nicht nur einen einzelnen Knoten, sondern eine Mindestanzahl von Knoten unter seine Kontrolle bringen muss für einen Angriff auf die untergeordnete Blockchain. Da es sich bei dem Knoten des untergeordneten Teilnetzwerks um unterschiedlich konfigurierte Datenverarbeitungseinheiten handeln kann, kann der Aufwand, welcher notwendig ist, um eine Mehrzahl der Knoten unter Kontrolle zu bringen, in nichtlinearer Weise ansteigen.

Nach Ausführungsformen sind für die erste Gültigkeitsprüfung alle Knoten des ersten untergeordneten Teilnetzwerks außer den ausgewählten Knoten stimmberechtigt für das Hinzufügen zusätzlicher Blöcke zu der ersten Blockchain. Ausführungsformen können den Vorteil haben, dass sie ein maximales Maß an Sicherheit bereitstellen, da eine maximale Anzahl von Knoten für eine Kontrolle des untergeordneten Teilnetzwerks von einem potenziellen Angreifer unter Kontrolle gebracht werden muss.

Nach Ausführungsformen besitzen die Knoten des ersten untergeordneten Teilnetzwerks, welche für das Hinzufügen zusätzlicher Blöcke zu der ersten Blockchain stimmberechtigt sind, Zugriff auf erste Prüfungskriterien zur Gültigkeitsprüfung von zusätzlichen Blöcken für die erste Blockchain.

Nach Ausführungsformen ist eine vordefinierte Mindestanzahl an Knoten des ersten untergeordneten Teilnetzwerks für die Gültigkeitsprüfung stimmberechtigt. Ausführungsformen können den Vorteil haben, dass sie in effizienter Weise ein hohes Maß an Sicherheit bereitstellen. Insbesondere bei größeren Teilnetzwerken mit einer verhältnismäßig großen Anzahl an Knoten kann es vorteilhaft sein, dass für die erste Gültigkeitsprüfung nicht alle Knoten stimmberechtigt sind. Dadurch kann das Abstimmungsverfahren vereinfacht und beschleunigt werden.

Ferner kann für eine Stimmberechtigung eines Knotens ein bestimmtes Maß an kryptografischer Sicherheit Voraussetzung sein. Umfasst das untergeordnete Teilnetzwerk Knoten, welche kryptografisch nicht oder nur in geringem Maße geschützt sind, so wird ein Ausschluss dieser Knoten von der Konsensbildung für die Gültigkeitsprüfung die Sicherheit des Teilnetzwerks erhöht.

Nach Ausführungsformen umfasst ein Prüfen des ersten zusätzlichen Blocks für die erste Blockchain durch einen Knoten des ersten untergeordneten Teilnetzwerks, welcher für das Hinzufügen zusätzlicher Blöcke zu der ersten Blockchain stimmberechtigt ist:
- Empfangen des ersten zusätzlichen Blocks durch den stimmberechtigten Knoten,
- Prüfen der Gültigkeit des ersten zusätzlichen Blocks unter Verwendung der ersten Prüfungskriterien,
- auf ein positives Ergebnis der Prüfung hin, Erstellen einer ersten Signatur des ersten zusätzlichen Blocks,
- Anhängen der Signatur an den ersten zusätzlichen Block. Ausführungsformen können den Vorteil haben, dass sie effiziente Prüfung des ersten zusätzlichen Blocks für die erste Blockchain ermöglichen, dessen Ergebnis auf Basis der Signatur jederzeit nachprüfbar ist. Nach Ausführungsformen umfassen die stimmberechtigten Knoten in einem ungeschützten Speicherbereich jeweils einen dementsprechenden Knoten zugeordneten privaten kryptografischen Schlüssel eines asymmetrischen Schlüsselpaars. Dieser private kryptografische Schlüssel dient als Signaturschlüssel, welcher durch den öffentlichen Schlüssel des entsprechenden asymmetrischen Schlüsselpaars geprüft werden kann. Der entsprechende öffentliche Schlüssel stellt damit einen Signaturprüfschlüssel dar.

Nach Ausführungsformen setzt das positive Ergebnis der zweiten Gültigkeitsprüfung einen Konsens von Knoten des übergeordneten Teilnetzwerks voraus, welche für das Hinzufügen zusätzlicher Blöcke des ersten untergeordneten Teilnetzwerks zu der Masterblockchain stimmberechtigt sind. Ausführungsformen können den Vorteil haben, dass sie eine effiziente Gültigkeitsüberprüfung durch das übergeordnete Teilnetzwerk ermöglichen. Zudem können Ausführungsformen den Vorteil haben, dass selbst wenn es einem Angreifer gelingt, einen einzelnen oder eine geringe Anzahl von Knoten des übergeordneten Teilnetzwerks unter seine Kontrolle bringen, er damit noch keine Kontrolle über die zweite Gültigkeitsprüfung erlangt.

Nach Ausführungsformen sind alle Knoten des übergeordneten Teilnetzwerks für das Hinzufügen zusätzlicher Blöcke des ersten untergeordneten Teilnetzwerks zu der Masterblockchain stimmberechtigt. Ausführungsformen können den Vorteil haben, dass sie ein hohes Maß an Sicherheit garantieren.

Nach Ausführungsformen besitzen die Knoten des übergeordneten Teilnetzwerks Zugriff auf Prüfungskriterien zur Gültigkeitsprüfung von zusätzlichen Blöcken für die alle Blockchains der Mehrzahl von Blockchains.

Ausführungsformen können den Vorteil haben, dass in den Knoten des übergeordneten Teilnetzwerks durch den Zugriff auf die Prüfkriterien aller Blockchains eine effiziente Überprüfung ermöglicht wird. Zugleich kann somit sichergestellt werden, dass nur die Knoten des übergeordneten Teilnetzwerks, d. h. ein kleiner Anteil der Gesamtheit an Knoten des Netzwerksystems, Kenntnis über alle Teilnetzwerke besitzt bzw. über die entsprechenden Prüfkriterien.

Nach Ausführungsformen umfasst ein Prüfen des ersten zusätzlichen Blocks für die erste Blockchain durch einen Knoten des übergeordneten Teilnetzwerks:
- Empfangen des ersten zusätzlichen Blocks durch den Knoten des übergeordneten Teilnetzwerks,
- Prüfen der Gültigkeit des ersten zusätzlichen Blocks unter Verwendung der ersten Prüfungskriterien,
- auf ein positives Ergebnis der Prüfung hin, Erstellen einer zweiten Signatur des ersten zusätzlichen Blocks,
- Anhängen der Signatur an den ersten zusätzlichen Block.

Ausführungsformen können den Vorteil haben, dass sie ein effizientes Prüfverfahren bereitstellen.

Nach Ausführungsformen umfasst die Freigabe die zweiten Signaturen der Knoten des übergeordneten Teilnetzwerks, deren Prüfung der Gültigkeit des ersten zusätzlichen Blocks positiv ausgefallen ist. Ausführungsformen können den Vorteil haben, dass eine Freigabe somit nicht nur eine Signatur der ausgewählten Knoten, sondern aller Knoten des übergeordneten Teilnetzwerks, deren Prüfung der Gültigkeit des ersten zusätzlichen Blocks positiv ausgefallen ist, berücksichtigt werden.

Nach Ausführungsformen ist für einen Konsens des übergeordneten Teilnetzwerks eine Zustimmung eines vordefinierten Anteils aller stimmberechtigten Knoten des übergeordneten Teilnetzwerks notwendig. Ausführungsformen können den Vorteil haben, dass die Sicherheit der zweiten Gültigkeitsprüfung durch das übergeordnete Teilnetzwerk erhöht wird, da eine Zustimmung durch eine Mehrzahl unabhängiger Knoten für ein Hinzufügen des zusätzlichen Blocks benötigt wird.

Nach Ausführungsformen ist für einen Konsens des übergeordneten Teilnetzwerks eine Einstimmigkeit aller stimmberechtigten Knoten des übergeordneten Teilnetzwerks notwendig. Ausführungsformen können den Vorteil haben, dass sie ein Höchstmaß an Sicherheit für die zweite Gültigkeitsprüfung ermöglichen, da für ein positives Ergebnis Einstimmigkeit aller stimmberechtigten Knoten notwendig ist. Nach Ausführungsformen sind alle Knoten des übergeordneten Teilnetzwerks stimmberechtigt, womit Einstimmigkeit aller übergeordneten Knoten notwendig ist.

Nach Ausführungsformen umfasst das Verfahren ferner: auf ein negatives Ergebnis der zweiten Gültigkeitsprüfung hin, Sperren aller ausgewählten Knoten des ersten untergeordneten Teilnetzwerks für die Teilnahme an Gültigkeitsprüfungen zusätzlicher Blöcke für die Masterblockchain durch das übergeordnete Teilnetzwerk.

Ausführungsformen können den Vorteil haben, dass hierdurch die Sicherheit des Systems erhöht werden kann. Ein negatives Ergebnis der zweiten Gültigkeitsprüfung weist darauf hin, dass die erste Gültigkeitsprüfung, deren positives Ergebnis eine Voraussetzung für die zweite Gültigkeitsprüfung bildet, möglicherweise manipuliert wurde. Da grundsätzlich nicht ausgeschlossen werden kann, dass auch die ausgewählten Knoten des entsprechenden untergeordneten Teilnetzwerks von der Manipulation mitumfasst sind, kann durch ein Sperren der entsprechenden ausgewählten Knoten verhindert werden, dass die Manipulation auf das übergeordnete Teilnetzwerk erstreckt werden kann. Durch das Sperren der ausgewählten Knoten des übergeordneten Teilnetzwerks kann dieses blockiert werden, während das übergeordnete Teilnetzwerk und damit alle weiteren von dem Netzwerksystem umfassten untergeordnete Teilnetzwerke ihre Arbeit fortsetzen können.

Nach Ausführungsformen umfasst das Verfahren auf ein negatives Ergebnis der zweiten Gültigkeitsprüfung hin ferner: Erzeugen eines Sperrhinweises. Ausführungsformen können den Vorteil haben, dass durch den Sperrhinweis auf mögliche Manipulationen hingewiesen wird. Beispielsweise kann der entsprechende Sperrhinweis an einen Administrator des Netzwerksystems gesendet werden, wodurch dieser auf die mögliche Manipulation aufmerksam gemacht wird. Der entsprechende Administrator erhält somit die Möglichkeit, den Manipulationsverdacht nachzuprüfen und gegebenenfalls entsprechende Gegenmaßnahmen zu ergreifen.

Nach Ausführungsformen umfasst das Verfahren ferner: Speichern des Sperrhinweises als Eintrag in einem Block der Masterblockchain. Ausführungsformen können den Vorteil haben, dass durch die Eintragung des Sperrhinweises in die Masterblockchain eine Sperrliste in effizienter Form implementiert werden kann, anhand derer ersichtlich wird, wann welche ausgewählten Knoten untergeordneter Teilnetzwerke gesperrt wurden. Ferner kann anhand des Sperrhinweises nachgeprüft werden, ob die Blockchain des untergeordneten Teilnetzwerks, dessen ausgewählte Knoten gesperrt wurden, möglicherweise trotz der Sperrung ergänzt wurde. Gelingt es beispielsweise einem Angreifer, die Blockade durch die Sperrung der entsprechend ausgewählten Knoten zu umgehen und die untergeordnete Blockchain trotz Sperrung fortzusetzen, kann anhand der Masterblockchain nachgeprüft werden, welche der Blöcke der untergeordneten Blockchain nach der Sperrung ergänzt wurden und damit ungültig sind.

Nach Ausführungsformen umfasst das Verfahren ferner: Aufheben der Sperren der ausgewählten Knoten des ersten untergeordneten Teilnetzwerks, falls für einen zweiten zusätzlichen Block des ersten untergeordneten Teilnetzwerks eine Gültigkeitsprüfung durch das übergeordnete Teilnetzwerk positiv ausfällt.

Ausführungsformen können den Vorteil haben, dass eine Sperrung der ausgewählten Knoten des ersten untergeordneten Teilnetzwerks wieder aufgehoben werden kann. Beispielsweise kann es sich bei dem Widerspruch zwischen der ersten Gültigkeitsprüfung und der zweiten Gültigkeitsprüfung um einen einmaligen Fehler handeln bzw. kann der entsprechende Fehler zwischenzeitlich durch den Administrator behoben worden sein, ohne dass ein externer Angreifer für den Widerspruch verantwortlich ist. Fällt die zweite Gültigkeitsprüfung für einen zweiten zusätzlichen Block des ersten untergeordneten Teilnetzwerks positiv aus, so kann darauf geschlossen werden, dass das erste untergeordnete Teilnetzwerk wieder korrekt funktioniert. Somit kann es dem untergeordneten Teilnetzwerk in effizienter Weise ermöglicht werden, dass es seine Arbeit nach Beheben eines Fehlers wiederaufnehmen kann.

Nach Ausführungsformen umfasst das Verfahren auf ein negatives Ergebnis der zweiten Gültigkeitsprüfung hin ferner: Erzeugen eines Entsperrhinweises. Ausführungsformen können den Vorteil haben, dass beispielsweise ein Administrator des Netzwerkssystems über die Entsperrung explizit informiert wird.

Nach Ausführungsformen umfasst das Verfahren ferner: Speichern des Entsperrhinweises als Eintrag in einem Block der Masterblockchain. Ausführungsformen können den Vorteil haben, dass die Entsperrung effizient dokumentiert wird.

Nach Ausführungsformen wird der erste zusätzliche Block in Form eines Hashwerts zu der Masterblockchain hinzugefügt. Ausführungsformen können den Vorteil haben, dass der Umfang der Masterblockchain kompakt gehalten werden kann.

Nach Ausführungsformen steuert das erste untergeordnete Teilnetzwerk eine Vorrichtung, wobei das Ausführen eines Steuerbefehls durch die Vorrichtung voraussetzt, dass der Steuerbefehl als Teil der Daten des ersten zusätzlichen Blocks in die erste Blockchain eingetragen wird.

Ausführungsformen können den Vorteil haben, dass es sich bei der Vorrichtung beispielsweise um eine Fertigungsanlage oder ein Fortbewegungsmittel handeln kann. Die Fertigungsanlage bzw. das Fortbewegungsmittel kann eine Mehrzahl von Teilsystemen umfassen, denen jeweils ein Teilnetzwerk zugeordnet ist. Diese Teilsysteme können dazu konfiguriert sein, dass sie unabhängig voneinander funktionieren. Dies kann zum einen der Erhöhung der Sicherheit dienen, da die einzelnen Teilsysteme keine vollständige Kenntnis über alle anderen Teilsysteme und deren Prozesse besitzen. Ferner kann dies der Auswahlsicherheit dienen, da bei einem Ausfall eines einzelnen Systems selektiv blockiert bzw. abgeschaltet werden kann, ohne dass die weiteren Systeme in Mitleidenschaft gezogen werden.

Nach Ausführungsformen umfasst ein Knoten des ersten untergeordneten Teilnetzwerks einen Sensor, wobei die Daten des ersten zusätzlichen Blocks für die erste Blockchain von dem Sensor erfasste Sensordaten umfassen. Ausführungsformen können den Vorteil haben, dass sie beispielsweise eine Sensorik zur Zustands-überwachung einer zuvor genannten Vorrichtung umfassen. Durch die Überprüfung der Sensordaten vor der Eintragung in die Blockchain kann sichergestellt werden, dass die entsprechenden Sensordaten vordefinierten Prüfkriterien genügen. Mithin kann die Gefahr möglicher Manipulationen der Sensordaten und daraus resultierende negative Auswirkungen auf die entsprechenden Vorrichtungen reduziert werden.

Ausführungsformen betreffen ein Netzwerksystem, welches eine Mehrzahl von untergeordneten Teilnetzwerken umfasst, wobei jedem untergeordneten Teilnetzwerk eine Blockchain einer Mehrzahl von Blockchains zugeordnet ist, wobei jedes untergeordnete Teilnetzwerk eine Mehrzahl von Datenverarbeitungseinheiten umfasst, wobei die Datenverarbeitungseinheiten Knoten des entsprechenden untergeordneten Teilnetzwerks bilden,
wobei das Netzwerksystem ferner ein übergeordnetes Teilnetzwerk umfasst, wobei dem übergeordneten Teilnetzwerk eine übergeordnete Masterblockchain zugeordnet ist und wobei das übergeordnete Teilnetzwerk zumindest einen ausgewählten Knoten aus jedem untergeordneten Teilnetzwerk der Mehrzahl von untergeordneten Teilnetzwerken umfasst,
wobei Netzwerksystem zum Ausführen des Verfahrens nach einem der vorangehenden Ansprüche konfiguriert ist.

Unter einer "Schnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Eine Kommunikation kann beispielsweise über ein Netzwerk erfolgen. Unter einem 'Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein virtuelles privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhaltet und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate.

Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem privaten Schlüssel eines einem Zertifikat zugeordneten kryptographischen Schlüsselpaares verschlüsselter Hashwert. Die Besonderheit einer solchen Signatur besteht darin, dass deren Urheberschaft und Zugehörigkeit zu einer bestimmten Person oder Instanz durch jeden Dritten geprüft werden kann.

Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweite der symmetrischen Schlüssel zum Authentifizieren des Senders der Nachricht dient.

Die Verwendung von Ordinalzahlen wie erstes, zweites, drittes etc. dient hier, soweit sich aus dem konkreten Zusammenhang nicht eindeutig etwas anderes ergibt, allein der Unterscheidung voneinander verschiedener Elemente und soll keine bestimmte Reihenfolge implizieren.

Im Weiteren werden Ausführungsformen der Erfindung mit Bezugnahme auf die Zeichnungen näher erläutert. Es zeigen:
- Figur 1: ein schematisches Blockdiagramm einer Ausführungsform eines exemplarischen Netzwerksystems,
- Figur 2: schematische Blockdiagramme von Ausführungsform exemplarischer Knoten des Netzwerksystems,
- Figur 3: ein schematisches Flussdiagramm einer ersten Ausführungsform eines exemplarischen Verfahrens,
- Figur 4: ein schematisches Flussdiagramm einer zweiten Ausführungsform eines exemplarischen Verfahrens, und
- Figur 5: ein schematisches Flussdiagramm einer dritten Ausführungsform eines exemplarischen Verfahrens.

Elemente der nachfolgenden Ausführungsformen, die einander entsprechen, werden mit denselben Bezugszeichen gekennzeichnet.

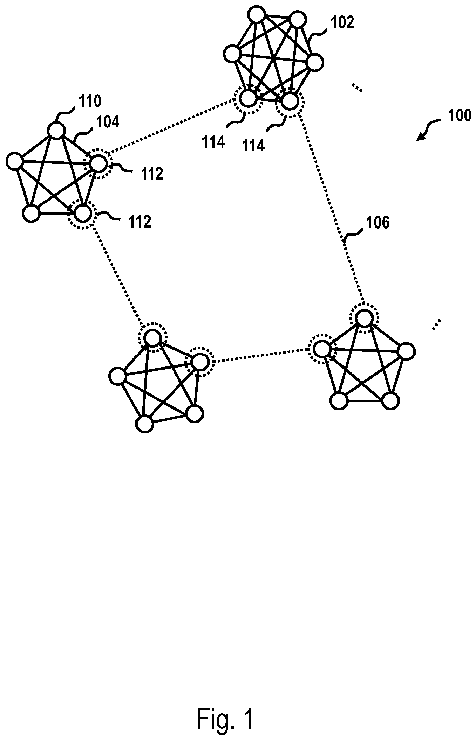

Figur 1 zeigt ein schematisches Blockdiagramm eines exemplarischen Netzwerksystems 100. Das Netzwerksystem 100 umfasst eine Mehrzahl untergeordneter Teilnetzwerke 102, 104, wobei jedem der untergeordneten Teilnetzwerke 102, 104 jeweils eine Blockchain zugeordnet ist. Jedes der untergeordneten Teilnetzwerke 102, 104 umfasst ausgewählte Knoten 112, 114, welche einem übergeordneten Teilnetzwerk 106 zugeordnet sind. Nach Ausführungsformen besteht das übergeordnete Teilnetzwerk 106 aus den ausgewählten Knoten 112, 114 der untergeordneten Teilnetzwerke 102, 104. Die Funktion der untergeordneten Teilnetzwerke 102, 104 wird durch das übergeordnete Teilnetzwerk 106 kontrolliert. Abgesehen davon sind die untergeordnete Teilnetzwerke 102, 104 unabhängig voneinander. Dem übergeordneten Teilnetzwerk 106 ist eine Masterblockchain zugeordnet, in welche die Blöcke der Blockchains eingetragen werden, beispielsweise in Form von Hashwerten, welche den untergeordneten Teilnetzwerken 102, 104 zugeordnet sind.

Die Kommunikation zwischen einem untergeordneten Teilnetzwerk, wie beispielsweise dem Teilnetzwerk 104, und dem übergeordneten Teilnetzwerk 106 erfolgt beispielsweise durch die ausgewählten Knoten 112 des untergeordneten Teilnetzwerks 102. Beispielsweise umfasst das untergeordnete Teilnetzwerk 102 zwei ausgewählte Knoten 112, welche zugleich von dem übergeordneten Teilnetzwerk 106 umfasst werden. Für ein Hinzufügen eines zusätzlichen Blocks zu der dem untergeordneten Teilnetzwerk 102 zugeordneten Blockchain ist eine Freigabe durch alle ausgewählten Knoten 112 des untergeordneten Teilnetzwerks 102 notwendig. Diese ausgewählten Knoten 112 geben das Hinzufügen frei, falls eine zweite Gültigkeitsprüfung des übergeordneten Teilnetzwerks 106erfolgreich war und der zusätzliche Block in die Masterblockchain eingetragen wurde.

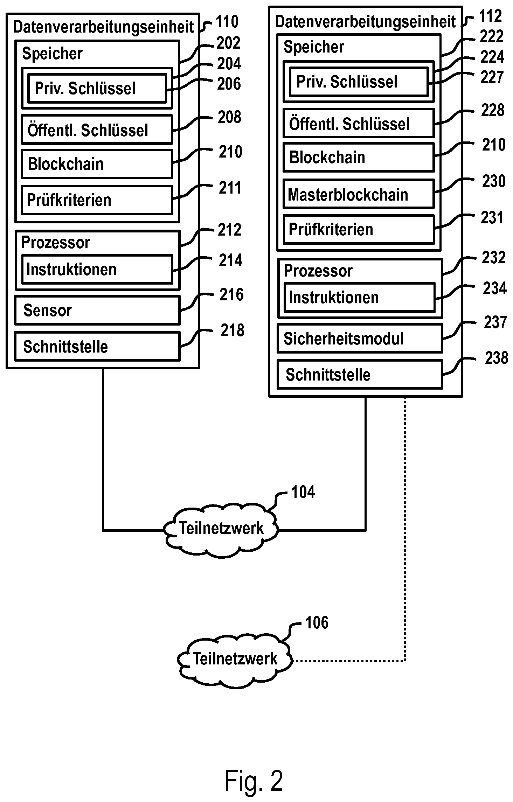

Figur 2 zeigt Ausführungsformen exemplarischer Knoten des Netzwerksystems 100. Der Knoten 110 umfasst eine Datenverarbeitungseinheit 110 mit einem Prozessor 212. Der Prozessor 212 ist dazu konfiguriert die Programminstruktionen 214 auszuführen, wodurch ein Verfahren zum manipulationssicheren Speichern von Daten in einer dem untergeordneten Teilnetzwerk 104 zugeordneten Blockchain 210 implementiert wird. Der Knoten 110 umfasst beispielsweise einen Sensor 216, welcher Sensordaten aufnimmt, die in der Blockchain 210 des untergeordneten Teilnetzwerks 104 gespeichert werden sollen. Knoten 110 umfasst ferner einen Speicher 202, in welchem die Blockchain 210 des untergeordneten Teilnetzwerks 104. Sollen Daten zu der Blockchain 210 hinzugefügt werden erzeugt beispielsweise Knoten 110 einen zusätzlichen Block und stellt diesen zur Abstimmung. In dem Speicher 202 sind ferner Prüfkriterien für die Gültigkeitsprüfung von Blöcken, welche zur Aufnahme in die Blockchain 210 vorgeschlagen sind. In einem geschützten Speicherbereich 204 des Speichers 202 ist ein privater Schlüssel 206 des Knoten 110 gespeichert. Im Falle einer positiven Gültigkeitsprüfung eines zusätzlichen Blocks signiert der Knoten 110 den entsprechenden beispielsweise mit dem privaten Schlüssel 206. Der Speichers 202 umfasst nach Ausführungsformen ferner einen öffentlichen Schlüssel 208 zum Prüfen von Signaturen durch den privaten Schlüssel 206. Schließlich umfasst der Knoten noch eine Kommunikationsschnittstelle zur Kommunikation mit den weiteren Knoten des untergeordneten Teilnetzwerks 218. Im Falle von sicherheitskritischen Daten erfolgt eine Kommunikation mit den mit den weiteren Knoten des untergeordneten Teilnetzwerks 218 beispielsweis unter Verwendung einer Ende-zu-Ende-Verschlüsselung.

Figur 2 zeigt ferner eine Ausführungsform eines ausgewählten Knoten des 112 des untergeordneten Teilnetzwerks 104, welcher zugleich von dem übergeordneten Teilnetzwerk 106 umfasst ist. Dieser Knoten ist beispielsweise im Wesentlichen analog aufgebaut zum Knoten 110. Zur Erhöhung der Sicherheit weist er beispielsweise ein zusätzliches Sicherheitsmodul 237 auf und/oder ist als Sicherheitsmodul konfiguriert. Der Speicher 222 des Knoten 112 umfasst neben der Blockchain 210 des untergeordneten Teilnetzwerks 104 die Masterblockchain 230 des Netzwerksystems 110. Ferner umfassen die Prüfungskriterien 231 neben den Prüfungskriterien 211 zum Prüfen von Blöcken für die Blockchain 210 Prüfungskriterien zum Prüfen von Blöcken für die Masterblockchain 230, d.h. zum Prüfen von Blöcken aller untergeordneten Teilnetzwerke. Schließlich ist die Kommunikationsschnittstelle 238 nicht nur zur Kommunikation mit den weiteren Knoten des untergeordneten Teilnetzwerks 218, sondern auch mit den Knoten des übergeordneten Teilnetzwerks 106 konfiguriert. Im Falle von sicherheitskritischen Daten erfolgt eine Kommunikation mit den mit den weiteren Knoten des untergeordneten Teilnetzwerks 218 beispielsweis unter Verwendung einer Ende-zu-Ende-Verschlüsselung.

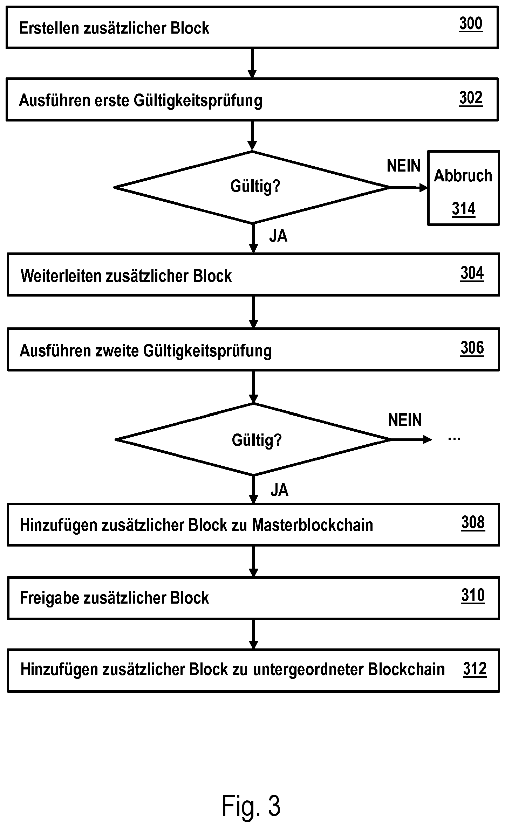

Figur 3 zeigt ein schematisches Flussdiagramm eines exemplarischen Verfahrens zur manipulationssicheren Speicherung von Daten in einer ersten Blockchain. In Schritt 300 wird ein erster zusätzlicher Block für die erste Blockchain eines ersten untergeordneten Teilnetzwerks erstellt. Der erstellte Block umfasst die zu speichernden Daten. In Schritt 302 erfolgt eine erste Gültigkeitsprüfung des zusätzlichen Blocks durch das erste untergeordnete Teilnetzwerk. Beispielsweise sendet der Knoten, welcher den zusätzlichen Block erstellt hat, den entsprechenden Block an den für ein Hinzufügen zu der ersten Blockchain berechtigten Knoten des ersten untergeordneten Teilnetzwerks. Diese Knoten prüfen die Gültigkeit des vorgeschlagenen zusätzlichen Blocks anhand von Prüfungskriterien. Erfüllt nun der vorgeschlagene Block die Prüfungskriterien, so stimmen die stimmberechtigten Knoten dem Hinzufügen des zusätzlichen Blocks zu. Ist der zusätzliche Block gültig, wird das Verfahren in Schritt 304 fortgesetzt. Ist der zusätzliche Block gültig, wird das Verfahren in Schritt 314 abgebrochen.

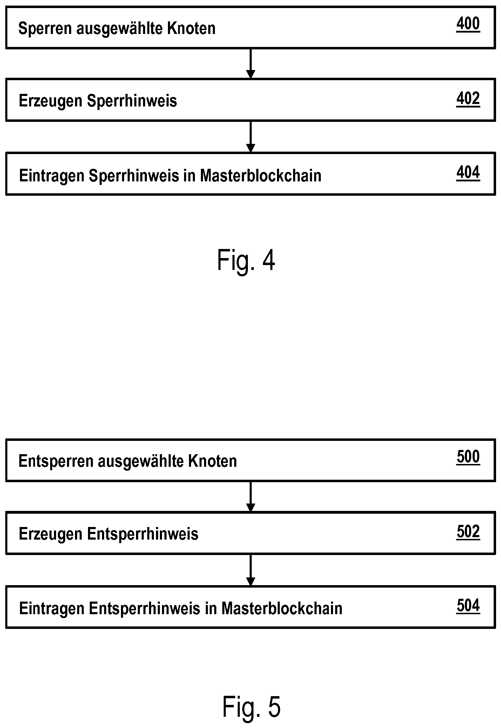

In Schritt 304 wird ein zusätzlicher Block auf ein positives Ergebnis der ersten Gültigkeitsprüfung hin an das übergeordnete Teilnetzwerk durch einen oder mehrere der ausgewählten Knoten des ersten untergeordneten Teilnetzwerks weitergeleitet. Ein positives Ergebnis der Gültigkeitsprüfung liegt beispielsweise vor, wenn eine ausreichende Anzahl der stimmberechtigten Knoten des ersten untergeordneten Teilnetzwerks dem Hinzufügen des vorgeschlagenen zusätzlichen Blocks zu der ersten Blockchain zugestimmt haben. Ihre Zustimmung können die entsprechenden Knoten beispielsweise durch eine Signatur des vorgeschlagenen zusätzlichen Blocks anzeigen und belegen. Liegt eine ausreichende Anzahl an Signaturen vor, so gilt die erste Gültigkeitsprüfung als erfolgreich. In Schritt 306 wird eine zweite Gültigkeitsprüfung des zusätzlichen Blocks durch das übergeordnete Teilnetzwerk ausgeführt. Die Knoten des übergeordneten Teilnetzwerks prüfen die Gültigkeit des zusätzlichen Blocks anhand von vordefinierten Prüfungskriterien, auf welche sie Zugriff haben. Wird eine ausreichende Zustimmung der Knoten des übergeordneten Teilnetzwerks erzielt, beispielsweise aller stimmberechtigten Blöcke, so gilt die Prüfung als erfolgreich. In Schritt 308 wird auf ein positives Ergebnis der zweiten Gültigkeitsprüfung hin der erste zusätzliche Block zu der Masterblockchain des übergeordneten Teilnetzwerks hinzugefügt. Beispielsweise wird der Block in Form eines Hashwerts hinzugefügt. Auf ein negatives Ergebnis der zweiten Gültigkeitsprüfung hin wird das Verfahren beispielsweise mit Schritt 400 der Figur 4 fortgesetzt.

In Schritt 310 erfolgt ferner eine Freigabe für ein Hinzufügen des zusätzlichen Blocks zu der ersten Blockchain durch das übergeordnete Teilnetzwerk. Diese Freigabe wird beispielsweise durch die ausgewählten Knoten des ersten untergeordneten Teilnetzwerks erteilt. In Schritt 312 wird der zusätzliche Block auf die Freigabe hin zu der ersten Blockchain hinzugefügt.

Figur 4 zeigt ein schematisches Flussdiagramm eines exemplarischen Verfahrens zum Sperren von Knoten eines untergeordneten Teilnetzwerks. Auf ein negatives Ergebnis der zweiten Gültigkeitsprüfung in Schritt 306 der Figur 3 hin werden die ausgewählten Knoten des untergeordneten Teilnetzwerkes für die Teilnahme an Gültigkeitsprüfungen zusätzlicher Blöcke für die Masterblockchain in Schritt 400 gesperrt. In Schritt 402 wird ein entsprechender Sperrhinweis erzeugt. In Schritt 404 wird der Sperrhinweis in einen Block der Masterblockchain eingetragen. Die Masterblockchain stellt somit eine Sperrliste bereit.

Figur 5 zeigt ein schematisches Flussdiagramm eines exemplarischen Verfahrens zum Sperren von Knoten eines untergeordneten Teilnetzwerks. Erfolgt in Schritt 500 eine positive Gültigkeitsprüfung eines weiteren zusätzlichen Blocks des untergeordneten Teilnetzwerks, so wird die Sperre der ausgewählten Knoten des übergeordneten Teilnetzwerks aufgehoben. In Schritt 502 wird ein entsprechender Entsperrhinweis erzeugt, welcher in Schritt 504 in die Masterblockchain eingetragen wird. Mithin ist die Sperrung der ausgewählten Knoten aufgehoben und in der Masterblockchain dokumentiert.

### Bezugszeichenliste

- 100: Netzwerksystem
- 102: untergeordnetes Teilnetzwerk
- 104: untergeordnetes Teilnetzwerk
- 106: übergeordnetes Teilnetzwerk
- 110: Knoten
- 112: ausgewählter Knoten
- 114: ausgewählter Knoten
- 202: Speicher
- 204: geschützter Speicherbereich
- 206: privater Schlüssel
- 208: öffentlicher Schlüssel
- 210: Blockchain
- 211: Prüfkriterien
- 212: Prozessor
- 214: Programminstruktionen
- 216: Sensor
- 218: Kommunikationsschnittstelle
- 222: Speicher
- 224: geschützter Speicherbereich
- 226: privater Schlüssel
- 228: öffentlicher Schlüssel
- 230: Masterblockchain
- 231: Prüfkriterien
- 232: Prozessor
- 234: Programminstruktionen
- 236: Sicherheitsmodul
- 238: Kommunikationsschnittstelle

## Patentansprüche

1. Verfahren zum manipulationssicheren Speichern von Daten in einer ersten Blockchain (210) einer Mehrzahl von Blockchains unter Verwendung eines Netzwerksystems (100),
wobei das Netzwerksystem (100) eine Mehrzahl von untergeordneten Teilnetzwerken (102, 104) umfasst, wobei jedem untergeordneten Teilnetzwerk (102, 104) eine der Blockchains (210) der Mehrzahl von Blockchains zugeordnet ist und wobei jedes untergeordnete Teilnetzwerk (102, 104) eine Mehrzahl von Datenverarbeitungseinheiten umfasst, wobei die Datenverarbeitungseinheiten Knoten (110, 112, 114) des entsprechenden untergeordneten Teilnetzwerks (102, 104) bilden,
wobei das Netzwerksystem (100) ferner ein übergeordnetes Teilnetzwerk (106) umfasst, wobei dem übergeordneten Teilnetzwerk (106) eine übergeordnete Masterblockchain (230) zugeordnet ist, welche alle Blöcke der Mehrzahl von Blockchains, zumindest in Form eines Hashwerts, umfasst, und wobei das übergeordnete Teilnetzwerk (106) zumindest einen ausgewählten Knoten (112, 114) aus jedem untergeordneten Teilnetzwerk (102, 104) der Mehrzahl von untergeordneten Teilnetzwerken (102, 104) umfasst,
wobei das Verfahren umfasst:
• Erstellen eines ersten zusätzlichen Blocks für die erste Blockchain (210), welcher als Eintrag die zu speichernden Daten umfasst, durch einen ersten Knoten (110, 112) eines ersten untergeordneten Teilnetzwerks (104), das der ersten Blockchain (210) zugeordnet ist,
• Ausführen einer ersten Gültigkeitsprüfung des ersten zusätzlichen Blocks durch das erste untergeordnete Teilnetzwerk (104),
• auf ein positives Ergebnis der ersten Gültigkeitsprüfung hin, Weiterleiten des ersten zusätzlichen Blocks an das übergeordnete Teilnetzwerk (106) durch den zumindest einen ausgewählten Knoten (112) des ersten untergeordneten Teilnetzwerks (104), welchen das übergeordnete Teilnetzwerk (106) umfasst,
• Ausführen einer zweiten Gültigkeitsprüfung des ersten zusätzlichen Blocks durch das übergeordnete Teilnetzwerk (106),
• auf ein positives Ergebnis der zweiten Gültigkeitsprüfung hin, Hinzufügen des ersten zusätzlichen Blocks zu der Masterblockchain (230),
• Freigabe durch das übergeordnete Teilnetzwerk (106) für ein Hinzufügen des ersten zusätzlichen Blocks zu der ersten Blockchain (210),
• auf die Freigabe hin, Hinzufügen des ersten zusätzlichen Blocks zu der ersten Blockchain (210).

2. Verfahren nach Anspruch 1, wobei die ausgewählten Knoten (112, 114) der untergeordneten Teilnetzwerke (102, 104), welche das übergeordnete Teilnetzwerk (106) umfasst, jeweils ein Sicherheitsmodul (236) umfassen, und/oder
wobei das übergeordnete Teilnetzwerk (106) zumindest zwei ausgewählte Knoten (112, 114) aus jedem untergeordneten Teilnetzwerk (102, 104) der Mehrzahl von untergeordneten Teilnetzwerken (102, 104) umfasst und/oder
wobei die Freigabe durch die ausgewählten Knoten (112) des ersten untergeordneten Teilnetzwerks (104) erfolgt, welchen das übergeordnete Teilnetzwerk (106) umfasst, und/oder
wobei die Freigabe zumindest eine Signatur des ersten zusätzlichen Blocks durch die ausgewählten Knoten (112) des ersten untergeordneten Teilnetzwerks (104) umfasst.

3. Verfahren nach einem der vorangehenden Ansprüche, wobei das positive Ergebnis der ersten Gültigkeitsprüfung einen Konsens zwischen Knoten (110) des ersten untergeordneten Teilnetzwerks (104) voraussetzt, welche für das Hinzufügen zusätzlicher Blöcke zu der ersten Blockchain (210) stimmberechtigt sind,
wobei vorzugsweise für die erste Gültigkeitsprüfung alle Knoten (110) des ersten untergeordneten Teilnetzwerks (104) außer den ausgewählten Knoten (112) stimmberechtigt für das Hinzufügen zusätzlicher Blöcke zu der ersten Blockchain (210) sind.

4. Verfahren nach einem der Ansprüche 3, wobei die Knoten (110) des ersten untergeordneten Teilnetzwerks (104), welche für das Hinzufügen zusätzlicher Blöcke zu der ersten Blockchain (210) stimmberechtigt sind, Zugriff auf erste Prüfungskriterien (211, 231) zur Gültigkeitsprüfung von zusätzlichen Blöcken für die erste Blockchain (210) besitzen.

5. Verfahren nach Anspruch 4, wobei ein Prüfen des ersten zusätzlichen Blocks für die erste Blockchain (210) durch einen Knoten (110) des ersten untergeordneten Teilnetzwerks (104), welcher für das Hinzufügen zusätzlicher Blöcke zu der ersten Blockchain (210) stimmberechtigt ist, umfasst:
• Empfangen des ersten zusätzlichen Blocks durch den stimmberechtigten Knoten (110),
• Prüfen der Gültigkeit des ersten zusätzlichen Blocks unter Verwendung der ersten Prüfungskriterien (211, 231),
• auf ein positives Ergebnis der Prüfung hin, Erstellen einer ersten Signatur des ersten zusätzlichen Blocks,
• Anhängen der Signatur an den ersten zusätzlichen Block.

6. Verfahren nach einem der vorangehenden Ansprüche, wobei das positive Ergebnis der zweiten Gültigkeitsprüfung einen Konsens von Knoten (112, 114) des übergeordneten Teilnetzwerks (106) voraussetzt, welche für das Hinzufügen zusätzlicher Blöcke des ersten untergeordneten Teilnetzwerks (104) zu der Masterblockchain (230) stimmberechtigt sind,
wobei vorzugsweise alle Knoten (112, 114) des übergeordneten Teilnetzwerks (106) für das Hinzufügen zusätzlicher Blöcke des ersten untergeordneten Teilnetzwerks (104) zu der Masterblockchain (230) stimmberechtigt sind.

7. Verfahren nach einem der vorangehenden Ansprüche, wobei die Knoten (112, 114) des übergeordneten Teilnetzwerks (106) Zugriff auf Prüfungskriterien (231) zur Gültigkeitsprüfung von zusätzlichen Blöcken für alle Blockchains der Mehrzahl von Blockchains besitzen.

8. Verfahren nach Anspruch 7, wobei ein Prüfen des ersten zusätzlichen Blocks für die erste Blockchain (210) durch einen Knoten (112, 114) des übergeordneten Teilnetzwerks (106) umfasst:
• Empfangen des ersten zusätzlichen Blocks durch den Knoten (112, 114) des übergeordneten (106) Teilnetzwerks,
• Prüfen der Gültigkeit des ersten zusätzlichen Blocks unter Verwendung der ersten Prüfungskriterien (211, 231),
• auf ein positives Ergebnis der Prüfung hin, Erstellen einer zweiten Signatur des ersten zusätzlichen Blocks,
• Anhängen der Signatur an den ersten zusätzlichen Block.

9. Verfahren nach Anspruch 8, wobei die Freigabe die zweiten Signaturen der Knoten (112, 114) des übergeordneten Teilnetzwerks (106) umfasst, deren Prüfung der Gültigkeit des ersten zusätzlichen Blocks positiv ausgefallen ist.

10. Verfahren nach einem der Ansprüche 6 bis 9, wobei für einen Konsens des übergeordneten Teilnetzwerks (106) eine Zustimmung eines vordefinierten Anteils aller stimmberechtigten Knoten (112, 114) des übergeordneten Teilnetzwerks (106) notwendig ist,
wobei vorzugsweise für einen Konsens des übergeordneten Teilnetzwerks (106) eine Einstimmigkeit aller stimmberechtigten Knoten (112, 114) des übergeordneten Teilnetzwerks (106) notwendig ist.

11. Verfahren nach einem der vorangehenden Ansprüche, wobei das Verfahren ferner umfasst:
auf ein negatives Ergebnis der zweiten Gültigkeitsprüfung hin, Sperren aller ausgewählten Knoten (112) des ersten untergeordneten Teilnetzwerks (104) für die Teilnahme an Gültigkeitsprüfungen zusätzlicher Blöcke für die Masterblockchain (230) durch das übergeordnete Teilnetzwerk (106).

12. Verfahren nach einem der Ansprüche 11, wobei das Verfahren ferner umfasst:
Aufheben der Sperren der ausgewählten Knoten (112) des ersten untergeordneten Teilnetzwerks (104), falls für einen zweiten zusätzlichen Block des ersten untergeordneten Teilnetzwerks (104) eine Gültigkeitsprüfung durch das übergeordnete Teilnetzwerk (106) positiv ausfällt.

13. Verfahren nach einem der vorangehenden Ansprüche, wobei der erste zusätzliche Block in Form eines Hashwerts zu der Masterblockchain (230) hinzugefügt wird und/oder
wobei das erste untergeordnete Teilnetzwerk (104) eine Vorrichtung steuert, wobei das Ausführen eines Steuerbefehls durch die Vorrichtung voraussetzt, dass der Steuerbefehl als Teil der Daten des ersten zusätzlichen Blocks in die erste Blockchain (210) eingetragen wird, und/oder
wobei ein Knoten (110) des ersten untergeordneten Teilnetzwerks (104) einen Sensor (216) umfasst, wobei die Daten des ersten zusätzlichen Blocks für die erste Blockchain (210) von dem Sensor (216) erfasste Sensordaten umfassen.

14. Netzwerksystem (100), welches eine Mehrzahl von untergeordneten Teilnetzwerken (102, 104) umfasst, wobei jedem untergeordneten Teilnetzwerk (102, 104) eine Blockchain (210) einer Mehrzahl von Blockchains zugeordnet ist, wobei jedes untergeordnete Teilnetzwerk eine Mehrzahl von Datenverarbeitungseinheiten umfasst, wobei die Datenverarbeitungseinheiten Knoten (110, 112, 114) des entsprechenden untergeordneten Teilnetzwerks (102, 104) bilden,
wobei das Netzwerksystem (100) ferner ein übergeordnetes Teilnetzwerk (106) umfasst, wobei dem übergeordneten Teilnetzwerk (106) eine übergeordnete Masterblockchain (230) zugeordnet ist, welche alle Blöcke der Mehrzahl von Blockchains, zumindest in Form eines Hashwerts, umfasst, und wobei das übergeordnete Teilnetzwerk (106) zumindest einen ausgewählten Knoten (112, 114) aus jedem untergeordneten Teilnetzwerk (102, 104) der Mehrzahl von untergeordneten Teilnetzwerken (102, 104) umfasst,
wobei Netzwerksystem (100) zum Ausführen des Verfahrens nach einem der vorangehenden Ansprüche konfiguriert ist.

## Claims

1. Method for the tamper-proof storage of data in a first blockchain (210) of a plurality of blockchains using a network system (100),
wherein the network system (100) comprises a plurality of subordinate subnetworks (102, 104), one of the blockchains (210) of the plurality of blockchains being assigned to each subordinate subnetwork (102, 104) and each subordinate subnetwork (102, 104) comprising a plurality of data-processing units, the data-processing units forming nodes (110, 112, 114) of the corresponding subordinate subnetwork (102, 104),
wherein the network system (100) further comprises a superordinate subnetwork (106), a superordinate master blockchain (230) being assigned to the superordinate subnetwork (106) and comprising all the blocks of the plurality of blockchains, at least in the form of a hash value, and the superordinate subnetwork (106) comprising at least one selected node (112, 114) from each subordinate subnetwork (102, 104) of the plurality of subordinate subnetworks (102, 104),
wherein the method comprises:
• creating a first additional block for the first blockchain (210) which comprises the data to be stored as an entry, by means of a first node (110, 112) of a first subordinate subnetwork (104) assigned to the first blockchain (210),
• performing a first validity check of the first additional block by means of the first subordinate subnetwork (104),
• in the event of a positive result of the first validity check, forwarding the first additional block to the superordinate subnetwork (106) by means of the at least one selected node (112) of the first subordinate subnetwork (104), which the superordinate subnetwork (106) comprises,
• performing a second validity check of the first additional block by means of the superordinate subnetwork (106),
• in the event of a positive result of the second validity check, adding the first additional block to the master blockchain (230),
• approval by means of the superordinate subnetwork (106) for adding the first additional block to the first blockchain (210),
• in the event of the approval, adding the first additional block to the first blockchain (210).

2. Method according to claim 1, wherein the selected nodes (112, 114) of the subordinate subnetworks (102, 104), which the superordinate subnetwork (106) comprises, each comprise a security module (236), and/or
wherein the superordinate subnetwork (106) comprises at least two selected nodes (112, 114) from each subordinate subnetwork (102, 104) of the plurality of subordinate subnetworks (102, 104), and/or
wherein the approval is performed by the selected nodes (112) of the first subordinate subnetwork (104), which the superordinate subnetwork (106) comprises, and/or
wherein the approval comprises at least one signature of the first additional block by the selected nodes (112) of the first subordinate subnetwork (104).

3. Method according to any of the preceding claims, wherein the positive result of the first validity check requires there to be a consensus between nodes (110) of the first subordinate subnetwork (104) which are authorized to vote for adding additional blocks to the first blockchain (210),
wherein, preferably for the first validity check, all the nodes (110) of the first subordinate subnetwork (104), except for the selected nodes (112), are authorized to vote for adding additional blocks to the first blockchain (210).

4. Method according to any of claims 3, wherein the nodes (110) of the first subordinate subnetwork (104) which are authorized to vote for adding additional blocks to the first blockchain (210) have access to first checking criteria (211, 231) for checking the validity of additional blocks for the first blockchain (210).

5. Method according to claim 4, wherein a check of the first additional block for the first blockchain (210) by means of a node (110) of the first subordinate subnetwork (104), which is authorized to vote for adding additional blocks to the first blockchain (210), comprises:
• receiving the first additional block by means of the voting-authorized node (110),
• checking the validity of the first additional block using the first checking criteria (211, 231),
• in the event of a positive result of the check, creating a first signature of the first additional block,
• attaching the signature to the first additional block.

6. Method according to any of the preceding claims, wherein the positive result of the second validity check requires there to be a consensus of nodes (112, 114) of the superordinate subnetwork (106) which are authorized to vote for adding additional blocks of the first subordinate subnetwork (104) to the master blockchain (230),
wherein preferably all the nodes (112, 114) of the superordinate subnetwork (106) are authorized to vote for adding additional blocks of the first subordinate subnetwork (104) to the master blockchain (230).

7. Method according to any of the preceding claims, wherein the nodes (112, 114) of the superordinate subnetwork (106) have access to checking criteria (231) for checking the validity of additional blocks for all the blockchains of the plurality of blockchains.

8. Method according to claim 7, wherein a check of the first additional block for the first blockchain (210) by means of a node (112, 114) of the superordinate subnetwork (106) comprises:
• receiving the first additional block by means of the nodes (112, 114) of the superordinate subnetwork (106),
• checking the validity of the first additional block using the first checking criteria (211, 231),
• in the event of a positive result of the check, creating a second signature of the first additional block,
• attaching the signature to the first additional block.

9. Method according to claim 8, wherein the approval comprises the second signatures of the nodes (112, 114) of the superordinate subnetwork (106) of which the check of the validity of the first additional block was positive.

10. Method according to any of claims 6 to 9, wherein for a consensus of the superordinate subnetwork (106), it is necessary for a predefined proportion of all the voting-authorized nodes (112, 114) of the superordinate subnetwork (106) to agree,
wherein, preferably, for a consensus of the superordinate subnetwork (106), it is necessary for all the voting-authorized nodes (112, 114) of the superordinate subnetwork (106) to agree.

11. Method according to any of the preceding claims, wherein the method further comprises:
in the event of a negative result of the second validity check, disabling all the selected nodes (112) of the first subordinate subnetwork (104) from participating in validity checks of additional blocks for the master blockchain (230) by means of the superordinate subnetwork (106).

12. Method according to any of claims 11, wherein the method further comprises:
removing the disabling of the selected nodes (112) of the first subordinate subnetwork (104) if a validity check by means of the superordinate subnetwork (106) is positive for a second additional block of the first subordinate subnetwork (104).

13. Method according to any of the preceding claims, wherein the first additional block is added to the master blockchain (230) in the form of a hash value, and/or
wherein the first subordinate subnetwork (104) controls a device, the execution of a control command by the device requiring the control command to be entered in the first blockchain (210) as part of the data of the first additional block, and/or
wherein a node (110) of the first subordinate subnetwork (104) comprises a sensor (216), the data of the first additional block for the first blockchain (210) comprising sensor data captured by the sensor (216).

14. Network system (100), which comprises a plurality of subordinate subnetworks (102, 104), a blockchain (210) of a plurality of blockchains being assigned to each subordinate subnetwork (102, 104), each subordinate subnetwork comprising a plurality of data-processing units, the data-processing units forming nodes (110, 112, 114) of the corresponding subordinate subnetwork (102, 104),
wherein the network system (100) further comprises a superordinate subnetwork (106), a superordinate master blockchain (230) being assigned to the superordinate subnetwork (106) and comprising all the blocks of the plurality of blockchains, at least in the form of a hash value, and the superordinate subnetwork (106) comprising at least one selected node (112, 114) from each subordinate subnetwork (102, 104) of the plurality of subordinate subnetworks (102, 104),
wherein the network system (100) is configured to perform the method according to any of the preceding claims.

## Revendications

1. Procédé de stockage de données protégé contre les manipulations dans une première chaîne de blocs (210) d'une multiplicité de chaînes de blocs moyennant l'emploi d'un système de réseau (100),
dans lequel le système de réseau (100) comprend une multiplicité de réseaux partiels subordonnés (102, 104), dans lequel une des chaine de blocs (210) de la multiplicité de chaines de blocs est associée à chaque réseau partiel subordonné (102, 104), et dans lequel chaque réseau partiel subordonné (102, 104) comprend une multiplicité d'unités de traitement de données, dans lequel les unités de traitement de données forment des nœuds (110, 112, 114) du réseau partiel subordonné (102, 104) en question,
dans lequel le système de réseau (100) comprend en outre un réseau partiel supérieur (106), dans lequel une chaîne de blocs maitre supérieure (230) est associée au réseau partiel supérieur (106), laquelle comprend tous les blocs de la multiplicité des chaines de blocs, au moins sous la forme d'une valeur de hachage, et dans lequel le réseau partiel supérieur (106) comprend au moins un nœud (112, 114) sélectionné provenant de chaque réseau partiel subordonné (102, 104) de la multiplicité de réseaux partiels subordonnés (102, 104),
où le procédé comprend :
• l'établissement d'un premier bloc supplémentaire pour la première chaine de blocs (210), lequel comprend les données à enregistrer en tant qu'entrée, par un premier nœud (110, 112) d'un premier réseau partiel subordonné (104), qui est associé à la première chaine de blocs (210),
• l'exécution d'une première vérification de validité du premier bloc supplémentaire par le premier réseau partiel subordonné (104),
• suite à un résultat positif de la première vérification de validité, la transmission du premier bloc supplémentaire au réseau partiel supérieur (106) par l'au moins un nœud (112) sélectionné du premier réseau partiel subordonné (104), lequel est compris par le réseau partiel supérieur (106),
• l'exécution d'une deuxième vérification de validité du premier bloc supplémentaire par le réseau partiel supérieur (106),
• suite à un résultat positif de la deuxième vérification de validité, l'ajout du premier bloc supplémentaire à la chaine de blocs maitre (230),
• la libération par le réseau partiel supérieur (106) pour un ajout du premier bloc supplémentaire à la première chaine de blocs (210),
• suite à la libération, l'ajout du premier bloc supplémentaire à la première chaine de blocs (210).

2. Procédé selon la revendication 1, dans lequel les nœuds (112, 114) sélectionnés des réseaux partiels subordonnés (102, 104), lesquels sont compris par le réseau partiel supérieur (106), comprennent respectivement un module de sécurité (236), et/ou
dans lequel le réseau partiel supérieur (106) comprend au moins deux nœuds (112, 114) sélectionnés à partir de chaque réseau partiel subordonné (102, 104) de la multiplicité de réseaux partiels subordonnés (102, 104), et/ou
dans lequel la libération par le nœud sélectionné (112) du premier réseau partiel subordonné (104) a lieu, lequel comprend le réseau partiel supérieur (106), et/ou
dans lequel la libération comprend au moins une signature du premier bloc supplémentaire.par le nœud (112) sélectionné du premier réseau partiel subordonné (104).

3. Procédé selon l'une des revendications précédentes, dans lequel le résultat positif de la première vérification de validité est conditionné à un consensus entre des nœuds (110) du premier réseau partiel subordonné (104), lesquels sont autorisés pour l'ajout de blocs supplémentaires à la première chaine de blocs (210),
dans lequel, de préférence, pour la première vérification de validité, tous les nœuds (110) du premier réseau partiel subordonné (104), à l'exclusion des nœuds sélectionnés (112), sont autorisés pour l'ajout de blocs supplémentaires à la première chaine de blocs (210).

4. Procédé selon l'une des revendications 3, dans lequel les nœuds (110) du premier réseau partiel subordonné (104), lesquels sont autorisés pour l'ajout de blocs supplémentaires à la première chaîne de blocs (210), possèdent un accès à des premiers critères de vérification (211, 231) pour la vérification de la validité de blocs supplémentaires pour la première chaine de blocs (210).

5. Procédé selon la revendication 4, dans lequel une vérification du premier bloc supplémentaire pour la première chaine de blocs (210) par un nœud (110) du premier réseau partiel subordonné (104), lequel est autorisé pour l'ajout de blocs supplémentaires à la première chaine de blocs (210), comprend :
• la réception du premier bloc supplémentaire par le nœud (110) autorisé,
• la vérification de la validité du premier bloc supplémentaire moyennant l'emploi des premiers critères de vérification (211, 231),
• suite à un résultat positif de la vérification, l'établissement d'une première signature du premier bloc supplémentaire,
• l'ajout de la signature au premier bloc supplémentaire.

6. Procédé selon l'une des revendications précédentes, dans lequel le résultat positif de la deuxième vérification de validité est conditionné à un consensus de nœuds (112, 114) du réseau partiel supérieur (106), lesquels sont autorisés pour l'ajout de blocs supplémentaires du premier réseau partiel subordonné (104) à la chaine de blocs maitre (230),
dans lequel, de préférence, tous les nœuds (112, 114) du réseau partiel supérieur (106) sont autorisés pour l'ajout de blocs supplémentaires du premier réseau partiel subordonné (104) à la chaine de blocs maitre (230).

7. Procédé selon l'une des revendications précédentes, dans lequel les nœuds (112, 114) du réseau partiel supérieur (106) possèdent un accès à des critères de vérification (231) permettant la vérification de la validité de blocs supplémentaires pour toutes les chaines de blocs de la multiplicité de chaines de blocs.

8. Procédé selon la revendication 7, dans lequel une vérification du premier bloc supplémentaire pour la première chaine de blocs (210) par un nœud (112, 114) du réseau partiel supérieur (106) comprend :
• la réception du premier bloc supplémentaire par le nœud (112, 114) du réseau partiel supérieur (106),
• la vérification de la validité du premier bloc supplémentaire moyennant l'emploi des premiers critères de vérification (211, 231),
• suite à un résultat positif de la vérification, l'établissement d'une deuxième signature du premier bloc supplémentaire,
• l'ajout de la signature au premier bloc supplémentaire.

9. Procédé selon la revendication 8, dans lequel la libération comprend les deuxièmes signatures des nœuds (112, 114) du réseau partiel supérieur (106) dont la vérification de la validité du premier bloc supplémentaire est positive.

10. Procédé selon l'une des revendications 6 à 9, dans lequel un accord d'une proportion prédéfinie de tous les nœuds (112, 114) autorisés du réseau partiel supérieur (106) est nécessaire pour un consensus du réseau partiel supérieur (106),
dans lequel, de préférence, une unanimité de tous les nœuds (112, 114) autorisés du réseau partiel supérieur (106) est nécessaire pour un consensus du réseau partiel supérieur (106).

11. Procédé selon l'une des revendications précédentes, où le procédé comprend en outre :
suite à un résultat négatif de la deuxième vérification de validité, la suspension de tous les nœuds (112) sélectionnés du premier réseau partiel subordonné (104) pour la participation à des vérifications de validité de blocs supplémentaires pour la chaine de blocs maitre (230) par le réseau partiel supérieur (106).

12. Procédé selon l'une des revendications 11, où le procédé comprend en outre :
la levée des suspensions des nœuds (112) sélectionnés du premier réseau partiel subordonné (104) dans le cas où une vérification de validité par le réseau partiel supérieur (106) se révèle positive pour un deuxième bloc supplémentaire du premier réseau partiel subordonné (104).

13. Procédé selon l'une des revendications précédentes, dans lequel le premier bloc supplémentaire est ajouté à la chaine de blocs maitre (230) sous forme d'une valeur de hachage, et/ou
dans lequel le premier réseau partiel subordonné (104) commande un dispositif, dans lequel l'exécution d'une instruction de commande par le dispositif suppose que l'instruction de commande est entrée comme faisant partie des données du premier bloc supplémentaire dans la première chaine de blocs (210), et/ou
dans lequel un nœud (110) du premier réseau partiel subordonné (104) comprend un détecteur (216), dans lequel les données du premier bloc supplémentaire comprennent des données de capteur détectées par le capteur (216) pour la première chaine de blocs (210).

14. Système de réseau (100), lequel comprend une multiplicité de réseaux partiels subordonnés (102, 104), dans lequel une des chaines de blocs (210) de la multiplicité de chaines de blocs est associée à chaque réseau partiel subordonné (102, 104), dans lequel chaque réseau partiel subordonné comprend une multiplicité d'unités de traitement de données, dans lequel les unités de traitement de données forment des nœuds (110, 112, 114) du réseau partiel subordonné (102, 104) en question,
dans lequel le système de réseau (100) comprend en outre un réseau partiel supérieur (106), dans lequel une chaîne de blocs maitre (230) supérieure est associée au réseau partiel supérieur (106), laquelle comprend tous les blocs de la multiplicité des chaines de blocs, au moins sous la forme d'une valeur de hachage, et dans lequel le réseau partiel supérieur (106) comprend au moins un nœud (112, 114) sélectionné provenant de chaque réseau partiel subordonné (102, 104) de la multiplicité de réseaux partiels subordonnés (102, 104),
dans lequel le système de réseau (100) est configuré pour l'exécution du procédé selon l'une des revendications précédentes.
